# EUROPÄISCHE PATENTSCHRIFT

(11) **EP 0 733 500 B1**
(45) Veröffentlichungstag und Bekanntmachung des Hinweises auf die Patenterteilung: **30.09.1998**
(21) Anmeldenummer: 96104010.2
(22) Anmeldetag: 14.03.1996
(51) Int. Cl.: B60G 17/056

(54) **Schaltventil zum willkürlichen Heben und Senken des Fahrzeugaufbaus**
Switching valve for raising and lowering of the vehicle body
Soupape de commutation pour le soulévement et l'abaissement de la carosserie d'un véhicule

(30) Priorität: 24.03.1995 DE 19510792
(43) Veröffentlichungstag der Anmeldung: 25.09.1996
(73) Patentinhaber: GRAU GMBH, D-69123 Heidelberg (DE)
(72) Erfinder: Blanz, Roland, 69253 Heiligkreuzsteinach (DE)
(74) Vertreter: Rehberg, Elmar, Dipl.-Ing.

(56) Entgegenhaltungen:
- DE-A- 4 202 729
- DE-B- 1 209 005
- DE-C- 3 344 022

## Beschreibung

Die Erfindung betrifft ein zwischen einem Niveauregelventil und einem Luftfederbalg angeordnetes, ein Gehäuse aufweisendes Schaltventil zum willkürlichen Heben und Senken des Fahrzeugaufbaus von luftgefederten Fahrzeugen mit Niveauregelung, welches in den Stellungen Heben, Senken und Stop die Verbindung zwischen dem Niveauregelveßtil und dem Luftfederbalg unterbricht und in der Stellung Fahrt diese Verbindung bereitstellt, wobei in dem Schaltventil ein Ein/Auslaßventil zum Belüften über eine eigene Druckluftversorgung und zum Entlüften vorgesehen ist.

Das Schaltventil kann insbesondere dann eingesetzt werden, wenn der Fahrzeugaufbau eines normalen luftgefederten Fahrzeugs angehoben oder abgesenkt werden soll. Das Schaltventil ist auch anwendbar, wenn eine Wechselbeladung mit Containern o. dgl. stattfindet.

Ein Schaltventil der eingangs beschriebenen Art ist aus der DE 42 02 729 C2 bekannt. Es besitzt ein Gehäuse und einen Hebel mit Schaltwelle, die über Nocken jeweils separate Sperrventile, Einlaßventile und Auslaßventile betätigt. Dem Schaltventil ist ein Niveauregelventil vorgeschaltet, über welches in der Stellung Fahrt die Luftfederbälge entsprechend der festgelegten Fahrzeughöhe eingesteuert werden. In den Stellungen Heben, Senken und Stop ist die Verbindung zum Luftfederbalg durch die geschlossenen Sperrventile unterbrochen. Die Einlaßventile sind mit einer eigenen Druckluftversorgung verbunden. Die den Hebel tragende Schaltwelle ist über eine Drehfeder in die Stellung Stop belastet, so daß das Schaltventil beim Loslassen die Stellung Stop einnimmt. Durch bewußtes Ziehen am Hebel kann die Stellung Fahrt manuell eingestellt werden. Die Schaltwelle ist zusätzlich als Kolben ausgebildet, so daß es auch möglich ist, die Stellung Fahrt über einen gezielt eingesteuerten Druckluftimpuls zu erreichen. Hierzu ist jedoch die elektrische Versorgung des Fahrzeuges Voraussetzung. Dieses bekannte Schaltventil dient nur zum willkürlichen Heben und Senken des Fahrzeugaufbaus sowie zum bewußten Einstellen der Stellungen Stop bzw. Fahrt. Eine automatische Rampenanpassung eines luftgefederten Fahrzeuges ist mit diesem Schaltventil nicht möglich.

Ein weiteres Schaltventil ist aus der DE 33 44 022 C2 bekannt. Auch diesem Schaltventil ist ein Niveauregelventil vorgeschaltet. Es ist ein manuell betätigbarer elektrischer Schalter vorgesehen, der zum willkürlichen Heben und Senken dient. An diesem Schalter können sämtliche vier Stellungen Heben, Senken, Fahrt und Stop eingestellt werden, wenn eine Stromversorgung gegeben ist. Fällt die Stromversorgung aus oder wird das Fahrzeug stromlos, so geht das Schaltventil in die Stellung Stop über. Die Stellung Fahrt muß manuell eingestellt werden. Für eine automatische Rampensteuerung ist ein elektrisch wirkender weiterer Schalter vorgesehen, der in einer Mittelstellung die Stellung Stop sowie beidseitig anschließend die Stellungen Heben und Senken aufweist. Wenn dieser zweite elektrische Schalter in Funktion gesetzt wird, wird damit der erste elektrische Schalter außer Funktion gebracht, und der zweite elektrische Schalter, aufgelegt auf eine Rampe, ermöglicht eine automatische Rampenanpassung der Höhe des Fahrgestells während eines Be- oder Entladevorganges an einer Rampe. Voraussetzung dafür ist aber wiederum die elektrische Versorgung des Fahrzeuges bzw. der Anlage. Wird die Rampe beim Hinwegfahren des Fahrzeuges verlassen, so muß über den ersten elektrischen Schalter die Stellung Fahrt eingestellt werden.

Der Erfindung liegt die Aufgabe zugrunde, ein Schaltventil der eingangs beschriebenen Art bereitzustellen, welches auch ohne elektrische Versorgung des Fahrzeuges, z. B. bei Stillstand an einer Rampe, manuell ein willkürliches Heben oder Senken gestattet, eine automatische Rampenanpassung erbringt und bei Übergang in Fahrt automatisch die Stellung Fahrt einnimmt, so daß die für den Normalbetrieb des Fahrzeuges festgelegte Fahrgestellhöhe eingenommen wird.

Erfindungsgemäß wird dies bei dem Schaltventil der eingangs beschriebenenen Art dadurch erreicht, daß das Schaltventil einen Steuerhebel aufweist, der relativ zum Gehäuse so aufgehängt ist, daß der Steuerhebel unter Schwerkrafteinfluß das Schaltventil in die Stellung Fahrt überführt und bei Anheben entgegen dem Schwerkrafteinfluß die Verbindung zwischen Niveauregelventil und Luftfederbalg unterbricht und das Ein-/Auslaßventil mit den Stellungen Heben, Senken und Stop betätigt.

Die Erfindung geht von dem Gedanken aus, ein Schaltventil zu schaffen, welches nur noch einen Steuerhebel aufweist, der einerseits zum willkürlichen Heben und Senken und andererseits zur automatischen Rampenanpassung eingesetzt werden kann, und dies auch dann, wenn das Fahrzeug lediglich mit Druckluft, nicht aber elektrisch versorgt ist, wie dies beispielsweise beim Stillstand eines Fahrzeuges an einer Rampe der Fall ist. Dann befindet sich ein Druckluftvorrat in den Vorratsbehältern, der abrufbar ist, um die Steuerbewegungen über die Steuerelemente des Schaltventils auszuführen. Wesentliche Bestandteile der Steuerelemente sind Sperrschieber und zugeornete gestufte Bohrungen sowie entsprechende Leitungsverbindungen. Zur automatischen Rampenanpassung wird der Steuerhebel auf die Rampe gelegt, wodurch der Steuerhebel einen Winkel zur Horizontalebene einnimmt, der einen Hebe- oder einem Senkvorgang auslöst, bis die horizontale Stellung erreicht ist. Die etwa horizontale Stellung des Steuerhebels ist der Stellung Stop zugeordnet, so daß nach dem Auflegen des Steuerhebels auf die Rampe zunächst einmal das Fahrgestell mit seiner Beladungs-plattform etwa auf Rampenhöhe gebracht wird. Jede nachfolgende Be- oder Entladung löst dann automatisch einen Nachregelvorgang am Schaltventil aus. Beim Wegfahren des Fahrzeuges von der Rampe, bei dem bisher oft vom Fahrer vergessen wurde, das Schaltventil manuell in die Stellung Fahrt zu bringen, sorgt der Schwerkrafteinfluß auf den Steuerhebel dafür, daß dieser eine Verschwenk- bzw. Drehbewegung um etwa 90° ausführt und damit am Schaltventil automatisch die Stellung Fahrt eingenommen wird. Damit kann das Niveauregelventil die für die Stellung Fahrt festgelegte Fahrgestellhöhe einsteuern. Mit dem neuen Schaltventil wird der Bauaufwand zum willkürlichen Heben und Senken einerseits und zur automatischen Rampenanpassung andererseits erheblich vereinfacht, indem nur noch ein Element für beide Aufgaben vorgesehen ist.

Für die Betätigung des Ein/Auslaßventils zum Be- und Entlüften der Luftfederbälge kann ein Exzentertrieb vorgesehen sein, an dem der Steuerhebel angreift. Diese Bauart ist insofern vorteilhaft, als das Steuerventil in der Stellung Fahrt vergleichsweise weniger winkelempfindlich als in der Stellung Heben oder Senken gemacht werden kann.

Der Exzentertrieb kann eine Drehwelle mit einem Exzenternocken aufweisen, der in eine Führungsnut eines Führungsstücks eingreift. Mit dem Führungsstück sind dann Sperrschieber verbunden, und zwar je nach Anzahl der Luftfederbälge und der getrennten Steuerung derselben.

Eine vorteilhafte Besonderheit stellt es dar, wenn der Steuerhebel kardanisch am Gehäuse aufgehängt ist. Dies ermöglicht auch dann ein Auflegen des Steuerhebels auf die Rampe, wenn das Fahrzeug bereits an die Rampe herangefahren und in einem zweckentsprechenden Abstandsbereich stillgesetzt worden ist. Eine zweite Bedienungsperson ist insoweit nicht erforderlich.

Es kann zweckmäßig sein, daß der Steuerhebel durch die Kraft einer Feder in einer vorgegebenen Verdrehebene gehalten ist. Für die beschriebene Rampenmanipulation muß der Steuerhebel jedoch aus dieser vorgegebenen Verdrehebene herausschwenkbar sein, um nachträglich an das Heranfahren des Fahrzeuges an die Rampe ein Auflegen zu ermöglichen. Umgekehrt kann es zweckmäßig sein, wenn durch die Feder nach dem Verlassen der Rampe in die vorgegebene Verdrehebene zurückgeführt wird.

Dem Schaltventil ist in seiner etwa horizontalen Lage die Stellung Stop des Schaltventils zugeordnet. Besonders vorteilhaft ist es, wenn diese Stellung Stop unter Ausschaltung der Wirkung der Schwerkraft absteckbar ausgebildet ist. Dann ergibt sich gezielt die Möglichkeit, den Fahrzeugaufbau gezielt während einer kurzen Fahrt abgesenkt zu halten, beispielsweise um eine zu niedrige Halleneinfahrt zu durchfahren oder in ein Fährschiff mit niedriger Raumhöhe einfahren zu können.

Zum willkürlichen Abstecken des Steuerhebels des Schaltventils in der Stellung Stop kann ein Absteckstift vorgesehen sein, der einerseits am Steuerhebel und andererseits am Gehäuse des Schaltventils angreift. Der Absteckstift kann von einer Kette unverlierbar am Fahrzeug gehalten sein. Sinnvoll in diesem Zusammenhang ist eine Betätigungsvorrichtung für das Verlassen der abgesteckten Stellung Stop. Über diese Betätigungsvorrichtung wird dann sichergestellt, daß bei entsprechenden Umständen trotz der vorher abgesteckten Stellung Stop verläßlich die Stellung Fahrt eingenommen wird und das Fahrgestell wieder seine vorgegebene Höhe erreicht. Die Betätigungsvorrichtung kann beispielsweise manuell, aber auch geschwindigkeitsabhängig oder auch zeitabhängig in Tätigkeit gesetzt werden, je nach Anwendungsfall. Eine einfache Ausführungsform der Betätigungsvorrichtung sieht einen Elektromagneten vor, der den Absteckstift aus der abgesteckten Stellung herausdrückt oder herauszieht, so daß dann wiederum unter Einwirkung der Schwerkraft automatisch die Stellung Fahrt eingenommen wird.

Der Absteckhebel muß nicht unmittelbar am Steuerhebel angreifen. Es ist auch möglich, daß dem Steuerhebel ein Mitnehmerhebel zugeordnet ist, der ebenso wie der Steuerhebel drehfest mit der Drehwelle verbunden ist. Der Absteckstift kann dann zwischen Mitnehmerhebel und Gehäuse eingesetzt werden. Zweckmäßig ist die Feder, die den Steuerhebel in die vorgegebene Verdrehebene hinein belastet, zwischen Steuerhebel und Mitnehmerhebel angeordnet, so daß bei jeder Verschwenkbewegung des Steuerhebels die Federkraft konstant bleibt.

Die Erfindung wird anhand bevorzugter Ausführungsbeispiele weiter erläutert und beschrieben. Es zeigen:
- Figur 1: einen Querschnitt durch eine bevorzugte Ausführungsform des Schaltventils,
- Figur 2: eine schematisierte Seitenansicht des rückwärtigen Endes eines Fahrzeuges mit dem Schaltventil an einer Rampe,
- Figur 3: die Verdeutlichung der möglichen Relativlagen des Steuerhebels des Schaltventils an bzw. vor einer Rampe,
- Figur 4: eine Ansicht des Schaltventils mit einem zugeordneten Absteckstift und
- Figur 5: eine Ansicht des Schaltventils mit einer Betätigungsvorrichtung.

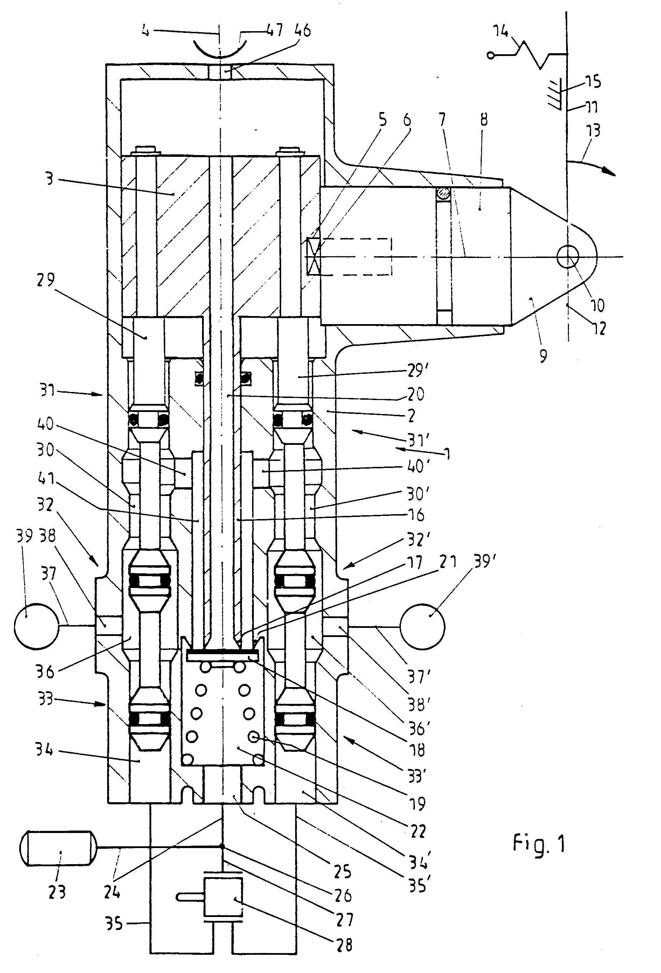

Das in Figur 1 dargestellte Schaltventil 1 weist ein Gehäuse 2 auf, in welchem ein Führungsstück 3 begrenzt gleitend in Richtung einer Achse 4 verschiebbar gelagert ist. Das Führungsstück 3 weist eine Führungsnut 5 auf, in die ein Exzenternocken 6 eingreift, der exzentrisch zu der Achse 7 einer Drehwelle 8 vorgesehen ist. Die Achsen 4 und 7 stehen etwa in einem Winkel von 90°. Die Drehwelle 8 ist im Gehäuse 2 drehbar gelagert. Am nach außen reichenden Ende 9 greift in einem Lager 10 ein Steuerhebel 11 an, der in einer Verdrehebene 12, die senkrecht zu der Achse 7 verläuft, verschwenkbar ist. Das Lager 10 bildet eine kardanische Aufhängung für den Steuerhebel 11 an der Drehwelle 9, so daß der Steuerhebel 11 auch in Richtung des Pfeiles 13 verschwenkbar ist. Es ist eine Feder 14 vorgesehen, die hier schematisch angedeutet ist. Die Feder 14 zieht den Steuerhebel 11 entgegen der Verschwenkrichtung gemäß Pfeil 13 gegen einen Anschlag 15 und hält den Steuerhebel 11 damit in der Verschwenkebene 12, wenn er nicht manuell gemäß Pfeil 13 bewegt wird. Der Steuerhebel 11 ist in Figur 1 in der Stellung Stop dargestellt, in einer Stellung, in der er sich im wesentlichen parallel zu der Achse 4 des Schaltventils 1 befindet.

Das Führungsstück 3 besitzt oder ist mit einem Fortsatz 16 versehen, der in einem vorspringenden Rand 17 endet, der mit einem Doppelventilkörper 18 ein Auslaßventil 17, 18 bildet. Der Doppelventilkörper 18 ist auf einer Feder 19 gehäuseseitig abgestützt. Der Fortsatz 16 ist zu Zwecken der Entlüftung hohl ausgebildet. Er weist einen Kanal 20 auf, der zu Zwecken der Entlüftung auch das Führungsstück 3 durchsetzt. Im Gehäuse 2 ist weiterhin ein vorspringender Rand 21 vorgesehen, der zusammen mit dem Doppelventilkörper 18 ein Einlaßventil 18, 21 bildet. In der dargestellten Stop-Stellung ist sowohl das Einlaßventil 18, 21 wie auch das Auslaßventil 17, 18 geschlossen.

Im Gehäuse 2 ist vor dem Einlaßventil 18, 21 eine Vorratskammer 22 vorgesehen, in der Druckluft aus einem Vorratsbehälter 23 über eine Leitung 24 an einem Anschluß 25 und damit in der Vorratskammer 22 ansteht. Von einem Abzweigpunkt 26 der Leitung 24 zweigt eine Leitung 27 ab, die zu einem Niveauregelventil 28 führt, so daß das Niveauregelventil 28 ebenfalls mit einer eigenen Druckluftversorgung ausgestattet ist.

An dem Führungsstück 3 sind zwei Sperrschieber 29 und 29' aufgehängt, die zwei Luftfederkreisen, beispielsweise der rechten und der linken Fahrzeugseite, zugeordnet sind. Da insoweit eine übereinstimmende Ausbildung und symmetrische Anordnung der Sperrschieber 29 und 29' vorgesehen ist, wird zunächst der Sperrschieber 29 beschrieben. Der Sperrschieber 29 ist stangenartig ausgebildet und durchsetzt eine gestufte Bohrung 30 im Gehäuse 2. Er besitzt drei Verdickungen 31, 32, 33, die jeweils mit Dichtungen ausgestattet sind, wobei den Dichtungen entsprechende Abschnitte der gestuften Bohrung 30 zugeordnet sind, so daß die so gebildeten Durchgänge je nach der Stellung des Führungsstücks 3 und des Sperrschiebers 29 dann entweder geschlossen oder geöffnet sind. Die gestufte Bohrung 30 endet in einem Anschluß 34 am Gehäuse 2, zu der eine Steuerleitung 35 herangeführt ist, die von dem Niveauregelventil 28 ausgeht. Von einer Mittelkammer 36 führt eine Leitung 37 von einem Anschluß 38 zu einem oder mehreren Luftfederbälgen 39. Eine Querbohrung 40 verbindet die gestufte Bohrung 30 mit einer Durchströmkammer 41, die um den Fortsatz 16 herum angeordnet ist und nach dem Ein/Auslaßventil 18, 21; 17, 18 angeordnet ist.

Entsprechendes gilt für den Sperrschieber 29', seine Ausbildung und Anordnung sowie seine Verbindung, so daß diesbezüglich auf den Sperrschieber 29 und dessen Beschreibung verwiesen werden kann. Zwischen den beiden Luftfederbälgen 39 und 39' besteht über die Querbohrungen 40 und 40' sowie die Durchströmkammer 41 eine Verbindung, jedenfalls in der Stellung Stop. In dieser Stellung Stop ist nicht nur das Ein/Auslaßventil geschlossen, sondern durch die Verdickungen 33 und 33' mit den entsprechenden Dichtungen auch die Leitungen 35 und 35' von dem Niveauregelventil 28 her abgesperrt.

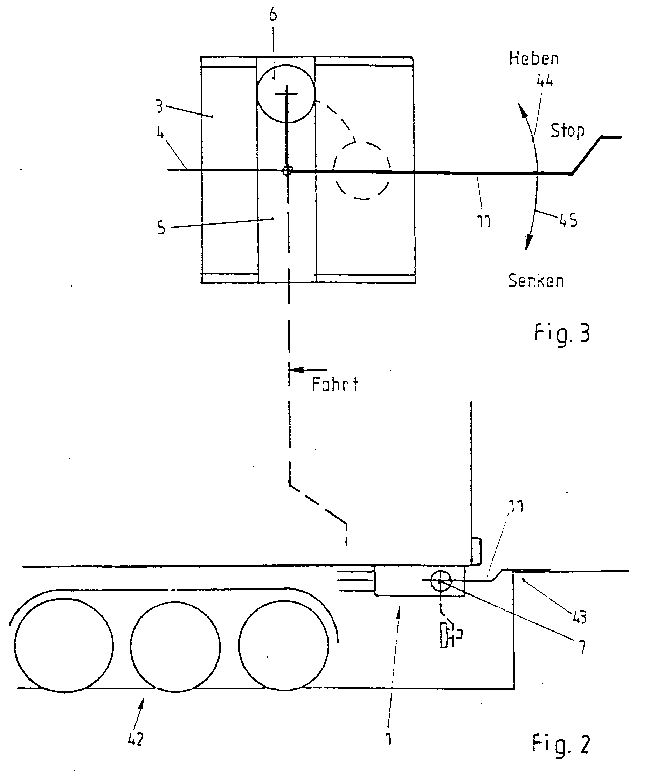

Figur 2 verdeutlicht die Anordnung des Schaltventils 1 am Ende eines schematisch angedeuteten Fahrzeuges 42, welches rückwärts an eine Rampe 43 herangefahren ist. Der Steuerhebel 11 des Schaltventils 1 ist in durchgezogener Linienführung aufgelegt auf die Rampe 43 dargestellt. In gestrichelter Linienführung ist die um 90° gedrehte Relativlage des Steuerhebels 11 für die Stellung Fahrt verdeutlicht. Um den Steuerhebel aus der unter Schwerkrafteinfluß hängenden, etwa vertikalen Stellung auf die Rampe 43 auflegen zu können, wird der Steuerhebel 11 zunächst gemäß Pfeil 13 (Figur 1) aus der Verdrehebene 12 herausgeschwenkt und über das Niveau der Rampe 43 angehoben. Der Steuerhebel 11 wird sodann in die Verdrehebene 12 zurückgeführt und auf der Rampe 43 aufgelegt. Diese Bewegungen des Steuerhebels 11 ziehen verschiedene Stellungen des Schaltventils 1 nach sich, die in Figur 3 relativ zu der Achse 4 des Führungsstückes 3 noch einmal gesondert dargestellt sind. In durchgezogener Linie ist übereinstimmend wie in Figur 2 die Stellung Stop dargestellt, wobei sich der Exzenternocken 6 in der Führungsnut 5 des Führungsstückes 3 an der dargestellten Stellung befindet. Wird der Steuerhebel 11 gemäß Figur 3 aus der Stellung Stop in Richtung des Pfeiles 44 in der Verdrehebene 12 oder auch außerhalb der Verdrehebene 12 nach oben verschwenkt, so wird die Stellung Heben eingenommen. Mit anderen Worten bewegen sich die Sperrschieber 29 und 29' in Figur 1 nach unten, so daß das Auslaßventil 17, 18 weiterhin geschlossen bleibt, jedoch das Einlaßventil 18, 21 geöffnet wird. Demzufolge kann Druckluft aus der Vorratskammer 22 über die Durchströmkammer 41 und die Querbohrungen 40 und 40' sowie über die gestuften Bohrungen 30 und 30' letztendlich zu den Luftfederbälgen 39 und 39' gelangen. Damit wird der Fahrzeugaufbau angehoben. Es ist erkennbar, daß der Steuerhebel 11 auf diese Art und Weise auch ohne eine Rampe 43 zum willkürlichen Anheben des Fahrzeugaufbaus genutzt werden kann. An einer Rampe 43 wird jedoch durch den Hebevorgang des Fahrzeugaufbaus der Steuerhebel 11 letztlich wiederum eine etwa horizontale Lage einnehmen, die der Stellung Stop zugeordnet ist, so daß unter Schließen des Einlaßventils 18, 21 die Abschlußstellung erreicht wird.

Wird umgekehrt der Steuerhebel 11 aus der Stellung Stop heraus gemäß Pfeil 45 verschwenkt, so wird die Stellung Senken erreicht. Die Sperrschieber 29 und 29' werden in Richtung der Achse 4 angehoben, wobei die Dichtungen an den Verdickungen noch keine Änderung hinsichtlich des Offenhaltens bzw. des Verschließens der Durchgänge erbringen. Es wird jedoch das Auslaßventil 17, 18 geöffnet, während das Einlaßventil 18, 21 geschlossen bleibt. Damit kann Druckluft aus den Luftfederbälgen 39 und 39' letztlich über den Kanal 20 und eine Entlüftungsöffnung 46 in die Atmosphäre entweichen. Die Entlüftungsöffnung 46 ist mit einem Flatterventil 47 abgedeckt.

Beim weiteren Verschwenken des Steuerhebels 11 gemäß Pfeil 45 über die Stellung Senken hinaus wird schließlich eine Lage des Steuerhebels erreicht, in der er sich etwa senkrecht hängend unter Schwerkrafteinfluß befindet, wie dies gestrichelt in Figur 3 dargestellt ist. Dieser Stellung ist die Stellung Fahrt zugeordnet. Die Sperrschieber 29 und 29' befinden sich dabei in einer solchen Relativlage, daß die Verdickungen 32 und 32' mit ihren Dichtungen in entsprechende Verengungen der gestuften Bohrungen 30 und 30' eingefahren sind, so daß an dieser stelle eine Abdichtwirkung erzielt wird um im übrigen die beiden Luftfederbälge 39 und 39' auch miteinander nicht mehr in Verbindung stehen. Dagegen sind die Verdickungen 33 und 33' in den Bereich der Mittelkammern 36 und 36' eingefahren, so daß sie keine Abdichtwirkung nach sich ziehen. Infolge dessen kann jetzt (Stellung Fahrt) das Niveauregelventil 28 entsprechend der festgelegten Fahrzeughöhe über den Fahrachsen arbeiten und Druckluft aus dem Vorratsbehälter 23 über die Leitungen 35 und 35' in die Luftfederbälge 39 und 39' einsteuern bzw. aus diesen ablassen.

Man erkennt aus Figur 2, daß der Steuerhebel 11 beim Be- oder Entladen des Fahrzeugs 42 immer wieder seine horizontale Lage einnimmt und insoweit eine Nachregelung an der Rampe 43 erfolgt. Beim Hinwegfahren des Fahrzeugs 42 von der Rampe 43 wirkt die Schwerkraft auf den Steuerhebel 11 ein, und er begibt sich damit automatisch in die etwa vertikal ausgerichtete hängende Stellung unter Schwerkrafteinfluß, so daß die Stellung Fahrt eingenommen wird. Das Einstellen der Stellung Fahrt am Ende eines Be- oder Entladevorganges an einer Rampe 43 kann also nicht mehr vergessen werden.

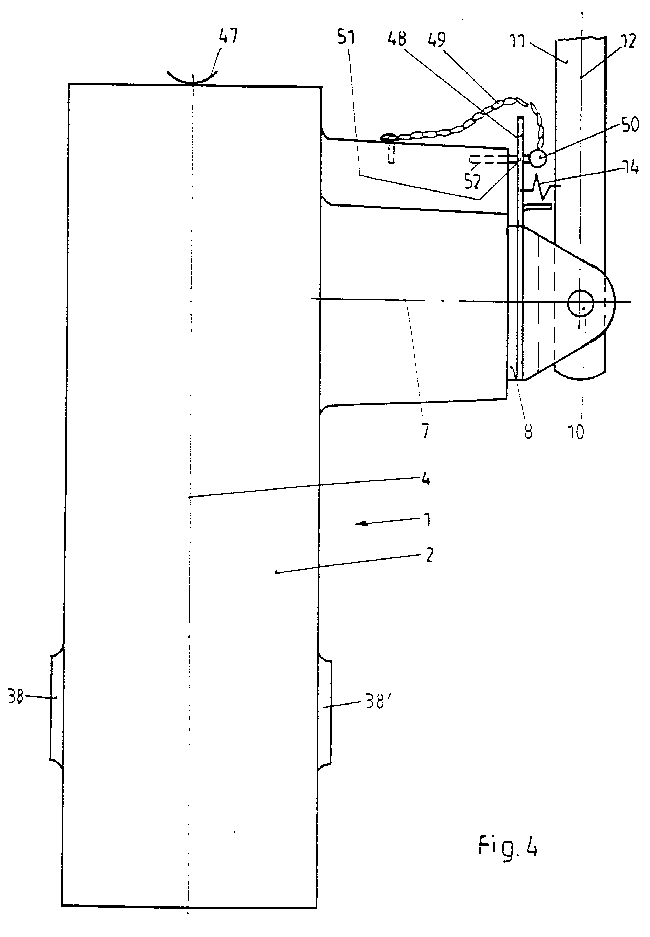

Figur 4 verdeutlicht noch einmal die Stellung Stop mit Hilfe einer Außenansicht, bei der sich die Teile in der gleichen Relativlage befinden wie in Figur 1. Mit der Drehwelle 8 ist ein Mitnehmerhebel 48 drehfest verbunden, der sich parallel zu dem Steuerhebel 11 erstreckt. Die Feder 14, die den Steuerhebel 11 in der Verdrehebene 12 hält, ist zwischen den Steuerhebel 11 und den Mitnehmerhebel 48 eingeschaltet, so daß sich die Federkraft beim Verdrehen des Steuerhebels 11 in der Verdrehebene 12 nicht ändert. An einer am Gehäuse 2 des Schaltventils befestigten Kette 49 befindet sich ein Absteckstift 50, der, wie dargestellt, in der Stellung Stop durch eine Durchbrechung 51 im Mitnehmerhebel 48 hindurch in eine Bohrung 52 im Gehäuse 2 eingesteckt werden kann, so daß damit die Stellung Stop fixiert ist. Damit ist es möglich, das Fahrzeug bewußt auch in einer abgesenkten Stellung des Fahrzeugaufbaus zu bewegen, also das automatische Einstellen der Stellung Fahrt unter Schwerkrafteinwirkung bewußt zu verhindern. Dies kann sinnvoll sein, wenn das Fahrzeug beispielsweise auf eine Fähre mit vergleichsweise niedriger Einfahrhöhe eingefahren werden soll oder beispielsweise eine niedrige Toreinfahrt durchfahren werden soll. Selbstverständlich ist es erforderlich, nach der Beendigung dieses Fahrvorganges in der abgesenkten Stellung den Absteckstift 50 herauszuziehen, so daß dann wieder die festgelegte Fahrzeughohe über die Stellung Fahrt eingenommen wird. Ebenso ist es möglich, den Fahrzeugaufbau über die festgelegte Höhe des Aufbaus hinaus anzuheben, und mit der Stellung Stop abzustecken, um Sonderbedingungen zu genügen.

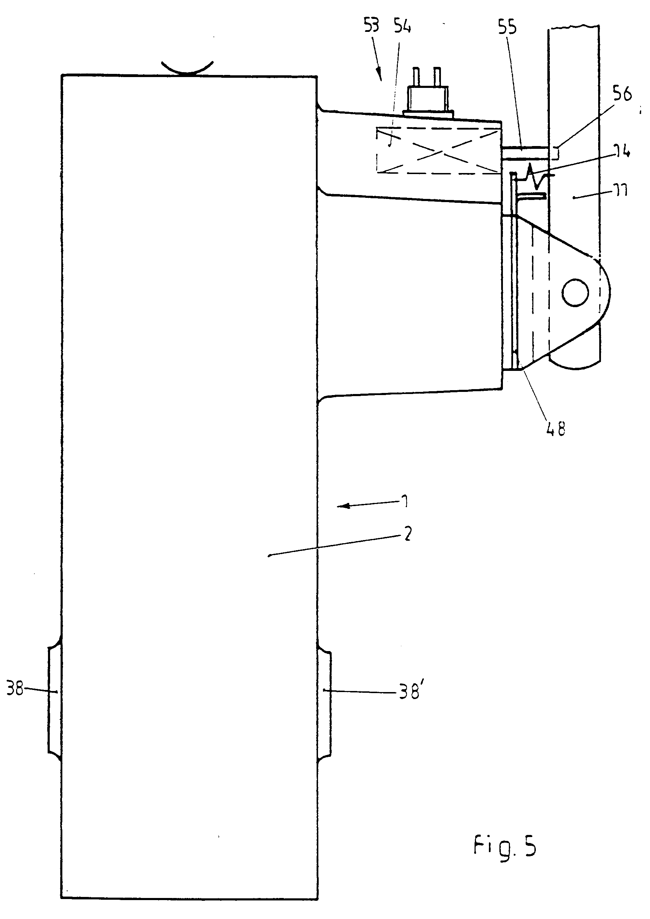

Figur 5 zeigt eine ähnliche Darstellung wie Figur 4, wobei die Feder 14 auch hier zwischen dem Mitnehmerhebel 48 und dem Steuerhebel 11 angeordnet ist. Eine Betätigungsvorrichtung 53 mit einem Elektromagneten 54 gestattet eine elektromechanische Betätigung. Als Absteckstift für die Stellung Stop kann der Kern 55 des Elektromagneten dienen, der in der abgesteckten Stellung Stop in eine Bohrung 56 des Steuerhebels 11 eingreift oder den Steuerhebel 11 untergreift, so daß er an der selbsttätigen Einnahme der Stellung Fahrt gehindert ist. Wird der Elektromagnet 54 dann erregt, was mit der Zündung des Fahrzeuges gekuppelt sein kann, dann wird der Kern 55 in den Elektromagneten 54 eingezogen, und der Steuerhebel 11 kommt von dem Kern 55 frei, so daß er die Stellung Fahrt unter Schwerkrafteinfluß einnehmen kann. Auch andere Ausbildungen und Anordnungen zum Abstecken der Stellung Stop sind denkbar.

### BEZUGSZEICHENLISTE

- 1: - Schaltventil
- 2: - Gehäuse
- 3: - Führungsstück
- 4: - Achse
- 5: - Führungsnut
- 6: - Exzenternocken
- 7: - Achse
- 8: - Drehwelle
- 9: - Ende
- 10: - Lager
- 11: - Steuerhebel
- 12: - Verdrehebene
- 13: - Pfeil
- 14: - Feder
- 15: - Anschlag
- 16: - Fortsatz
- 17: - Rand
- 18: - Doppelventilkörper
- 19: - Feder
- 20: - Kanal
- 21: - Rand
- 22: - Vorratskammer
- 23: - Vorratsbehälter
- 24: - Leitung
- 25: - Anschluß
- 26: - Abzweigpunkt
- 27: - Leitung
- 28: - Niveauregelventil
- 29: - Sperrschieber
- 30: - Bohrung
- 31: - Verdickung
- 32: - Verdickung
- 33: - Verdickung
- 34: - Anschluß
- 35: - Steuerleitung
- 36: - Mittelkammer
- 37: - Leitung
- 38: - Anschluß
- 39: - Luftfederbalg
- 40: - Querbohrung
- 41: - Durchströmkammer
- 42: - Fahrzeug
- 43: - Rampe
- 44: - Pfeil
- 45: - Pfeil
- 46: - Entlüftungsöffnung
- 47: - Flatterventil
- 48: - Mitnehmerhebel
- 49: - Kette
- 50: - Absteckstift
- 51: - Durchbrechung
- 52: - Bohrung
- 53: - Betätigungsvorrichtung
- 54: - Elektromagnet
- 55: - Kern
- 56: - Bohrung

## Patentansprüche

1. Zwischen einem Niveauregelventil (28) und einem Luftfederbalg (39) angeordnetes, ein Gehäuse (2) aufweisendes Schaltventil (1) zum willkürlichen Heben und Senken des Fahrzeugaufbaus von luftgefederten Fahrzeugen (42) mit Niveauregelung, welches in den Stellungen Heben, Senken und Stop die Verbindung zwischen dem Niveauregelventil (28) und dem Luftfederbalg (39) unterbricht und in der Stellung Fahrt diese Verbindung bereitstellt, wobei in dem Schaltventil (1) ein Ein-/Auslaßventil (18, 21; 17, 18) zum Belüften über eine eigene Druckluftversorgung und zum Entlüften vorgesehen ist, **dadurch gekennzeichnet**, daß das Schaltventil (1) einen Steuerhebel (11) aufweist, der relativ zum Gehäuse (2) so aufgehängt ist, daß der Steuerhebel (11) unter Schwerkrafteinfluß das Schaltventil (1) in die Stellung Fahrt überführt und bei Anheben entgegen dem Schwerkrafteinfluß die Verbindung zwischen Niveauregelventil (28) und Luftfederbalg (39) unterbricht und das Ein-/Auslaßventil (18, 21; 17, 18) mit den Stellungen Heben, Senken und Stop betätigt.

2. Schaltventil nach Anspruch 1, **dadurch gekennzeichnet**, daß für die Betätigung des Ein-/Auslaßventils (18, 21; 17, 18) zum Beund Entlüften der Luftfederbälge (39; 39') ein Exzentertrieb vorgesehen ist, an dem der Steuerhebel (11) angreift.

3. Schaltventil nach Anspruch 2, **dadurch gekennzeichnet**, daß der Exzentertrieb eine Drehwelle (8) mit einem Exzenternocken (6) aufweist, der in eine Führungsnut (5) eines Führungsstückes (3) eingreift, und daß mit dem Führungsstück (3) Sperrschieber (29; 29') verbunden sind.

4. Schaltventil nach Anspruch 1 oder 3, **dadurch gekennzeichnet**, daß der Steuerhebel (11) kardanisch zum Gehäuse (2) aufgehängt ist.

5. Schaltventil nach Anspruch 4, **dadurch gekennzeichnet**, daß der Steuerhebel (11) durch die Kraft einer Feder (14) in einer vorgegebenen Verdrehebene (12) gehalten ist.

6. Schaltventil nach einem der Ansprüche 1 bis 5, **dadurch gekennzeichnet**, daß dem Schalthebel (11) in seiner etwa horizontalen Lage die Stellung Stop des Schaltventils (1) zugeordnet ist, und daß diese Stellung Stop unter Ausschaltung der Wirkung der Schwerkraft absteckbar ausgebildet ist.

7. Schaltventil nach Anspruch 6, **dadurch gekennzeichnet**, daß zum willkürlichen Abstecken des Steuerhebels (11) des Schaltventils (1) in der Stellung Stop ein Absteckstift (50) vorgesehen ist, der einerseits am Steuerhebel (11) und andererseits am Gehäuse (2) des Schaltventils (1) angreift.

8. Schaltventil nach den Ansprüchen 6 und 7, **dadurch gekennzeichnet**, daß eine Betätigungsvorrichtung (53) für das Verlassen der abgesteckten Stellung Stop vorgesehen ist.

9. Schaltventil nach Anspruch 8, **dadurch gekennzeichnet**, daß als Betätigungsvorrichtung (53) ein Elektromagnet (54) vorgesehen ist.

10. Schaltventil nach den Ansprüchen 5 bis 9, **dadurch gekennzeichnet**, daß dem Steuerhebel (11) ein Mitnehmerhebel (48) zugeordnet ist, der ebenso wie der Steuerhebel (11) drehfest mit der Drehwelle (6) verbunden ist, und daß die Feder (14) zwischen Steuerhebel (11) und Mitnehmerhebel (48) angeordnet ist.

## Claims

1. A switching valve (1) for the arbitrary raising and lowering of the vehicle body of air suspended vehicles (42) with height control, the switching valve (1) being arranged between a levelling valve (28) and an air suspension bellow (39) and comprising a housing, the switching valve (1) interrupting the connection between the levelling valve (28) and the air suspension bellow (39) in the positions raise, lower and stop and providing this connection in the position drive, an inlet/outlet valve (18, 21; 17, 18) being provided in the switching valve (1) for aerating by a separate compressed air supply and for venting, **characterized in**
that the switching valve (1) comprises a control lever (11) suspended with respect to the housing (2), so that the control lever (11) brings the switching valve (1) into position drive under the influence of gravity and so that the control lever (11) interrupts the connection between the levelling valve (28) and the air suspension bellow (39) and actuates the inlet/outlet valve (18, 21; 17, 18) with the positions raise, lower and stop in case of lifting the control lever (11) in opposite direction to the influence of gravity.

2. The switching valve of claim 1, **characterized in** that an eccentric drive is provided for the actuation of the inlet/outlet valve (18, 21; 17, 18) for aerating the air suspension bellows (39; 39'), the control lever (11) engaging in the eccentric drive.

3. The switching valve of claim 2, **characterized in** that the eccentric drive comprises a rotating shaft (8) with an eccentric cam (6) engaging in a guiding groove (5) of a guiding element (3), and that stopping slides (29; 29') are connected to the guiding element (3).

4. The switching valve of claim 1 or 3, **characterized in** that the control lever (11) is suspended cardanic with respect to the housing (2).

5. The switching valve of claim 4, **characterized in** that the control lever (11) is held in a predetermined turning plane (12) by the force of a spring (14).

6. The switching valve of one of the claims 1 to 5**, characterized in** that the position stop of the switching valve (1) is allocated to the control lever (11) in its approximately horizontal orientation, and that this position stop is formed to be fixable without the effect of gravity.

7. The switching valve of claim 6, **characterized in** that a fixing pin (50) is provided for the arbitrary fixing of the control lever (11) of the switching valve (1), the fixing pin (50) engaging on the one hand in the control lever (11) and on the other hand in the housing (2) of the switching valve (1).

8. The switching valve of claims 6 and 7, **characterized in** that an actuation means (53) for leaving the fixed position stop is provided.

9. The switching valve of claim 8, **characterized in** that an electromagnet (54) is provided as actuation means (53).

10. The switching valve of claims 5 to 9, **characterized in** that a carrying lever (48) is allocated to the control lever (11), the carrying lever (48) as well as the control lever (11) being fixly connected to the turning shaft (8), and that the spring (14) is arranged between the control lever (11) and the carrying lever (48).

## Revendications

1. Valve de commutation (1) comportant un corps (2), disposée entre une valve de réglage de niveau (28) et un ressort pneumatique (39), pour permettre de relever et d'baisser intentionellement la caisse de véhicules (42) à suspension pneumatique avec réglage de niveau, valve de commutation qui, dans les positions de relèvement, d'abaissement et d'arrêt, coupe la communication entre la valve de réglage de niveau (28) et le ressort pneumatique (39) et qui, dans la position de marche, établit cette communication, une soupape d'admission/échappement (18, 21; 17, 18) étant prévue dans la valve de commutation (1) pour l'introduction d'air au moyen d'une alimentation propre en air comprimé et pour l'évacuation d'air, caractérisée en ce que la valve de commutation (1) comporte un levier de commande (11) qui est suspendu par rapport au corps (2) d'une façon telle, que le levier de commande (11), sous l'effet de la pesanteur, fasse passer la valve de commutation (1) dans la position de marche et que, lorsqu'il est soulevé en s'opposant à l'effet de la pesanteur, il coupe la communication entre la valve de réglage de niveau (28) et le ressort pneumatique (39) et actionne la soupape d'admission/échappement (18, 21; 17, 18) selon les positions de relèvement, d'abaissement et d'arrêt.

2. Valve de commutation selon la revendication 1, caractérisée en ce que, pour l'actionnement de la soupape d'admission/échappement (18, 21; 17, 18) en vue de l'introduction d'air dans les ressorts pneumatiques (39; 39') et de l'évacuation d'air hors de ceux-ci, il est prévu un mécanisme à excentrique sur lequel agit le levier de commande (11).

3. Valve de commutation selon la revendication 2, caractérisée en ce que le mécanisme à excentrique comporte un arbre tournant (8) muni d'une came d'excentrique (6), qui s'engage dans une rainure de guidage (5) d'une pièce de guidage (3), et en ce que des registres d'arrêt (29; 29') sont reliés à la pièce de guidage (3).

4. Valve de commutation selon la revendication 1 ou 3, caractérisée en ce que le levier de commande (11) est suspendu au corps (2) par une articulation à la Cardan.

5. Valve de commutation selon la revendication 4, caractérisée en ce que le levier de commande (11) est maintenu, par la force d'un ressort (14), dans un plan de rotation prédéfini (12).

6. Valve de commutation selon l'une des revendications 1 à 5, caractérisée en ce que la position d'arrêt de la valve de commutation (1) est associée à la position sensiblement horizontale du levier de commande (11) et en ce que cette position d'arrêt est réalisée de façon indexable avec annulation de l'effet de la pesanteur.

7. Valve de commutation selon la revendication 6, caractérisée en ce que, pour l'indexation intentionnelle du levier de commande (11) de la valve de commutation (1) dans la position d'arrêt, il est prévu une goupille d'indexation (50) qui ait, d'une part, sur le levier de commande (11) et, d'autre part, sur le corps (2) de la valve de commutation (1).

8. Valve de commutation selon les revendications 6 et 7, caractérisée en ce qu'il est prévu un dispositif d'actionnement (53) permettant de quitter la position d'arrêt indexée.

9. Valve de commutation selon la revendication 8, caractérisée en ce qu'il est prévu, comme dispositif d'actionnement (53), un électroaimant (54).

10. Valve de commutation selon les revendications 5 à 9, caractérisée en ce qu'au levier de commande (11) est associé un levier suiveur (48) qui, tout comme le levier de commande (11), est relié à l'arbre tournant (6) de manière à en être solidaire en rotation, et en ce que le ressort (14) est disposé entre le levier de commande (11) et le levier suiveur (48).
